# EUROPEAN PATENT SPECIFICATION

(11) **EP 4 122 728 B1**
(45) Date of publication and mention of the grant of the patent: **10.04.2024**
(21) Application number: 21187435.9
(22) Date of filing: 23.07.2021
(51) Int. Cl.: B60J 7/00, B60J 1/20

(54) **ROLLO ASSEMBLY AND METHOD FOR ASSEMBLING IT**
ROLLO-ANORDNUNG UND VERFAHREN ZUR MONTAGE DAVON
ENSEMBLE STORE À ENROULEUR ET SON PROCÉDÉ D'ASSEMBLAGE

(43) Date of publication of application: 25.01.2023
(73) Proprietor: Inalfa Roof Systems Group B.V., 5807 GW Oostrum (NL)
(72) Inventor: Megens, Tommie, deceased (NL)
(74) Representative: De Vries & Metman

(56) References cited:
- CN-A- 111 483 303
- DE-A1-102014 225 895
- JP-A- 2014 234 018
- US-A1- 2017 087 966

## Description

The invention in a first aspect relates to a rollo assembly intended for use in an open roof as defined in claim 1.

During assembling a rollo assembly of such a type, problems may be encountered resulting from a mismatch between the rollo cloth width and the guide distance. Not only can such a mismatch hinder the assembling process, but it also may lead to a (fully or partly) defective rollo assembly of which a proper functioning may be jeopardized. For example, when such a mismatch occurs there is a risk that the rearward end of the longitudinal guides scratches along the rollo cloth, which may result in damaging the rollo cloth and shortening its lifespan. It also may lead to the generation of annoying sounds during operation of the rollo assembly.

Thus, in accordance with the present invention a rollo assembly is provided having the characteristic features in accordance with claim 1.

As a result of the provision of the lead-in guides a mismatch between the rollo cloth width and the guide distance can be compensated because the lead-in guides (during an assembling process of the rollo assembly) can be adjusted to assume a rotational position in which (during operation of the rollo assembly after the assembling process has been completed) an optimal transfer of the longitudinal edges of the rollo cloth from the winding shaft towards and into the longitudinal guides is safeguarded.

In an embodiment of the rollo assembly, the longitudinal guides and the winding shaft extend substantially horizontally, and the rotational axis extends substantially vertically when the rollo assembly is in an operational position. Here 'operational position' means a position in which the rollo assembly is mounted in an open roof construction which is mounted in a vehicle.

In an embodiment the end part of the lead-in guide and the rearward end of the longitudinal guide comprise cooperating aligning members adapted to provide, during assembly of the rollo assembly, an automatic positioning (for example a rotation around the rotation axis) of the lead-in guide in a position in which, in the assembled position of the rollo assembly, its end part in a desired manner connects to the rearward end of the longitudinal guide. The provision of such aligning members thus substantially simplifies the assembling process.

Then, in a preferred embodiment, the aligning members may comprise projections provided on the lead-in guide and aligning surfaces provided on the longitudinal guides or vice versa.

In another embodiment the end part of the lead-in guide and rearward end of the longitudinal guide are provided with cooperating connecting members for securely attaching the lead-in guide to the longitudinal guide, such as, for example, cooperating projections and recesses or snap members. The provision of such connecting members may ensure that the lead-in guide and longitudinal guide remain united once the assembling process has been finished. It is noted, however, that such connecting members may be of a reversible type, such that it is possible to again disconnect the lead-in guide and longitudinal guide, if desired.

In one embodiment the rollo assembly further comprises a carrier part supporting a bearing for the winding shaft and supporting the rotation axis with lead-in guide, wherein said carrier part and the longitudinal guides are provided with cooperating pre-aligning members adapted to pre-align the carrier part and longitudinal guides during assembly of the rollo assembly. These features may further promote the assembling process.

In such an embodiment it is conceivable, for example, that the pre-aligning members comprise projections provided on the carrier part and aligning surfaces provided on the longitudinal guides or vice versa.

For further improving the stability or strength of the completed rollo assembly, a frame part may be provided for securely fixing the carrier part to a longitudinal guide.

It is conceivable that the rotation axis for the lead-in guide is defined by a screw member, but other members which function in an equivalent manner (such as a bolt) are possible too.

In an embodiment of the rollo assembly the longitudinal guides house drive members, such as for example push/pull cables, for the rollo cloth, wherein the rollo cloth at a leading end thereof facing away from the winding shaft and extending between the opposite longitudinal edges of the rollo cloth is provided with a pull beam, wherein the drive members and pull beam are provided with cooperating coupling members intended for establishing a coupling therebetween. The fact that such coupling members are provided enables to start the assembling process with the drive members (which are positioned inside, and thus basically are part of, the longitudinal guides) still disconnected from the pull beam, thus starting with two separate units (with the drive members belonging to a first unit and the pull beam belonging to a second unit) which then can be connected to each other to complete the rollo assembly. The established coupling may be disconnectable (reversible) or not.

It is conceivable that such coupling members are provided on adapters attached to opposite ends of the pull beam and on drive member plates attached to the drive members, respectively.

In one embodiment such cooperating coupling members are adapted to provide a snap coupling between the drive members and pull beam, which snap coupling may be of a reversible nature. However, this does not exclude other types of coupling (reversible or not).

Such a coupling can be established during assembly of the rollo assembly by manually moving the pull beam away from the winding shaft and towards the drive members or by activating the drive members (for example electrically when the drive members are driven by an electric motor) to move in the direction of the winding shaft and towards the pull beam.

In a second aspect the invention relates to a method for assembling a rollo assembly according to the present invention, comprising the steps of:
(a) mounting the winding shaft to a carrier part in a manner to be rotatable for winding thereon or unwinding therefrom the rollo cloth, and mounting the lead-in guides to the carrier part in a manner to be each rotable around an axis substantially perpendicularly to a part of the rollo cloth that is unwound from the winding shaft;
(b) moving towards each other the carrier part and longitudinal guides in such a manner that cooperating aligning members on the lead-in guides and on the longitudinal guides will cooperate for positioning (for example rotating) the lead-in guides in a desired position, and in such a manner that a connection between the lead-in guides and the longitudinal guides will be established;
(c) moving towards each other a pull beam provided at a leading end of the rollo cloth and drive members extending in the longitudinal guides, in such a manner that cooperating coupling members provided on the pull beam and on the drive members establish a coupling therebetween which is adapted to transmit a driving force from the drive members to the pull beam.

The invention further may relate to an embodiment of such a method
- wherein mounting the lead-in guides to the carrier part during step (a) comprises fastening the lead-in guides to the carrier part using screws or bolts which are mounted with a moment not impeding a rotation of the lead-in guides with respect to the carrier part; and/or
- wherein moving the carrier part and longitudinal guides towards each other during step (b) causes cooperating connecting members on the lead-in guides and on the longitudinal guides to cooperate for securely attaching the lead-in guides to the longitudinal guides; and/or
- wherein moving the pull beam and drive members towards each other comprises manually moving the pull beam towards the drive members or driving the drive members towards the pull beam; and/or
- wherein the method further comprises the step of connecting the carrier plate and longitudinal guides using an additional frame part.

Hereinafter the invention will be elucidated while referring to the drawings, in which:
Figure 1 shows part of a rollo assembly in an assembled state;
Figure 2 shows part of the rollo assembly in an exploded view;
Figure 3 shows constitutive parts of the rollo assembly before assembling;
Figure 4 is a side elevational view of the assembled rollo assembly;
Figure 5 is a cross-sectional view according to V-V in figure 4;
Figure 6 is a cross-sectional view according to VI-VI in figure 4;
Figure 7 is a cross-sectional view according to VII-VII in figure 4, and
Figures 8-10 illustrate consecutive steps during assembling the rollo assembly.

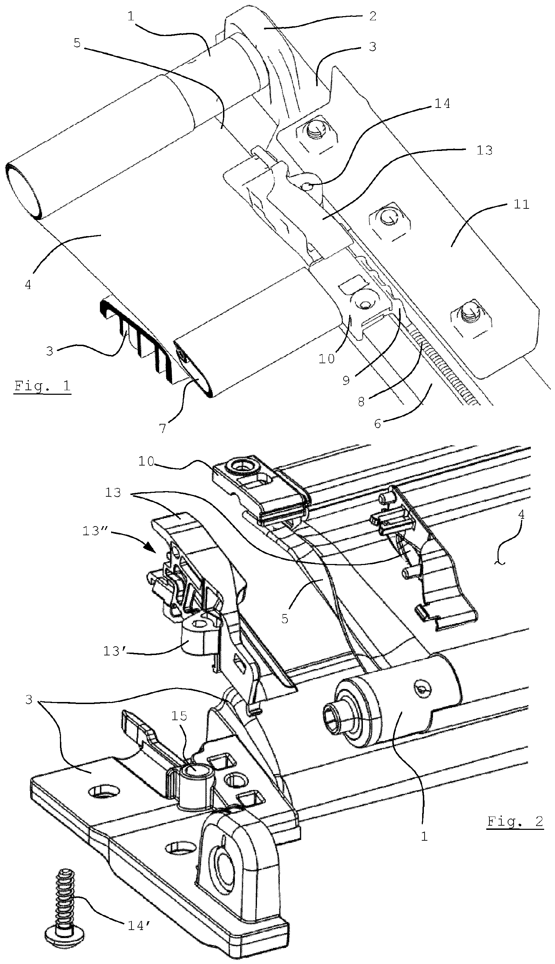

Firstly referring to figure 1, part of a rollo assembly is illustrated which is intended for use in an open roof construction for a vehicle (not illustrated but which, as is known generally, comprises a roof opening in a stationary roof part which, in a desired amount, has to be covered by the rollo assembly). In this figure only a left rear part of such a rollo assembly is illustrated in an isometric top view and one will realise that a right rear part of the rollo assembly connecting to the left rear part is of a similar, however mirrored construction.

The rollo assembly comprises a rotatable winding shaft 1 which at its opposite ends by rollo bearings 2 is mounted on a carrier part or plate 3. A rollo cloth 4 in a desired amount is windable onto or unwindable from the winding shaft 1. As is known per se, the winding shaft 1 may be spring-loaded for winding the rollo cloth 4 thereon. The rollo cloth 4 comprises two opposite longitudinal edges 5 (only one of which is visible here) defining therebetween a rollo cloth width.

The rollo assembly further comprises two opposite longitudinal guides 6 intended for guiding respective ones of the longitudinal edges 5 of the rollo cloth 4. Said longitudinal guides 6 generally will extend along longitudinal side edges of the roof opening and define a guide distance between themselves. These longitudinal guides 6 also are intended for guiding opposite outer ends of a pull beam 7 which is attached to a leading end of the rollo cloth 4 facing away from the winding shaft 1.

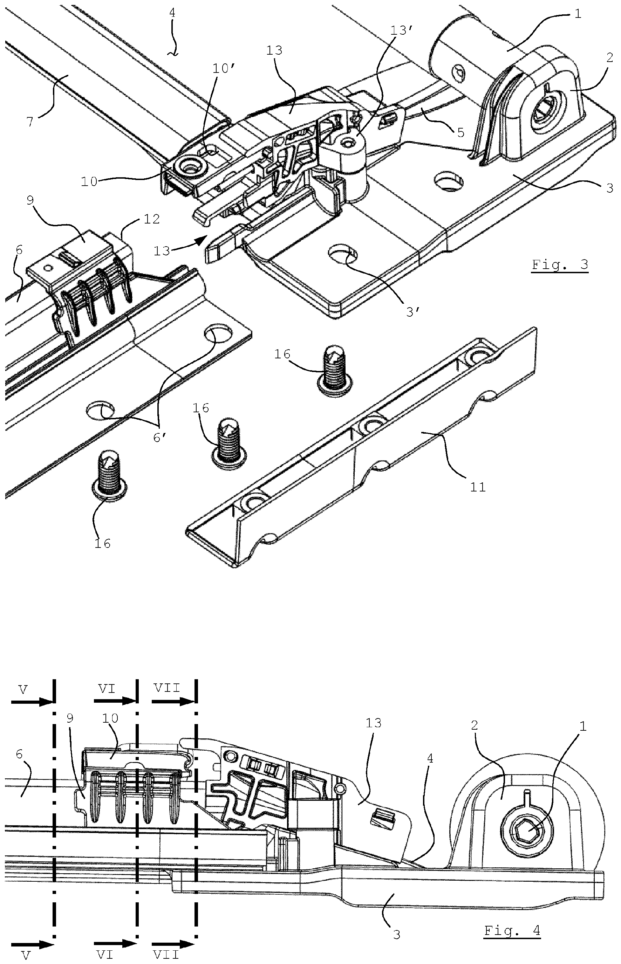

The longitudinal guides 6 house drive members, in the illustrated embodiment push/pull cables 8, which are attached to drive member plates 9 which by means of adapters 10 are connected to the pull beam 7. For this, the adapters 10 and drive member plates 9 may comprise cooperating coupling members (for example a snap lip 9' on the drive member plate 9 and a receiving snapping opening 10' in the adapter 10, see figure 3). Further a frame part 11 may be provided establishing a secure connection between the longitudinal guide 6 and the carrier plate 3. Such a frame part 11 may also be part of a larger frame part which is attached (for example glued) to the vehicle body.

Each longitudinal guide 6 extends between a forward end (not illustrated) facing away from the winding shaft 1 and a rearward end 12 facing towards the winding shaft and separated therefrom by a gap. It is necessary that such a gap is bridged by the rollo cloth 4 in a correct manner, also when there is a mismatch between the above defined rollo cloth width and the guide distance (it is noted that it is not per se necessary that the rollo cloth width and guide distance are equal; generally, however, a specific relation between these should be present and if that is not the case, the mentioned mismatch occurs). Thus, in accordance with the present invention, the rollo assembly between the rearward end 12 of each longitudinal guide 6 and the winding shaft 1 further comprises a lead-in guide 13 for correctly guiding a respective one of the longitudinal edges 5 of the rollo cloth 4, after being unwound from the winding shaft 1, across the gap and into the rearward end 12 of the longitudinal guide 6, while compensating any mismatch between the rollo cloth width and the guide distance.

Said lead-in guide 13 is mounted for a rotation around a rotation axis 14 which extends substantially perpendicularly to a part of the rollo cloth 4 that is unwound from the winding shaft 1. This rotation axis 14 may be defined by a screw 14' (see figure 2) which is screwed (for example from below) through a hole 15 of the carrier plate 3 and into a protrusion 13' of the lead-in guide 13 (with such a moment that a rotation of the lead-in guide around the rotation axis 14 is not impeded). The lead-in guide 13 has an end part 13" which in an assembled position of the rollo assembly will face and connect to the rearward end 12 of the longitudinal guide 6.

In figure 3 holes 3' and 6' in the carrier plate 3 and in the longitudinal guide 6, respectively, are shown which can house fasteners, such as for example bolts 16, for securing the frame part 11.

In an operational position of the rollo assembly, that is a position in which it is mounted in a vehicle, the longitudinal guides 6 and the winding shaft 1 generally will extend substantially horizontally, and as a result the rotation axis 14 then extends substantially vertically.

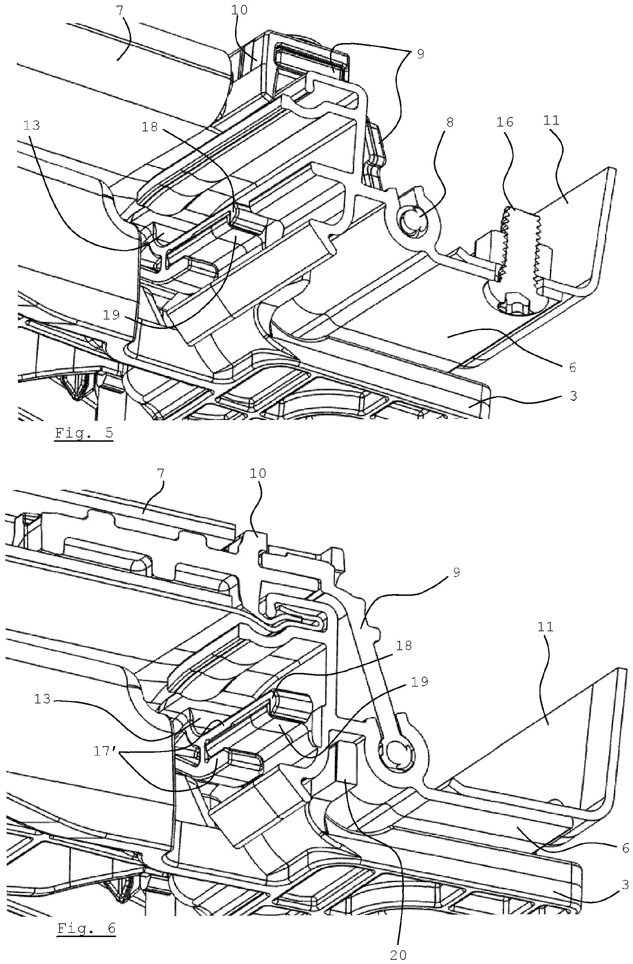

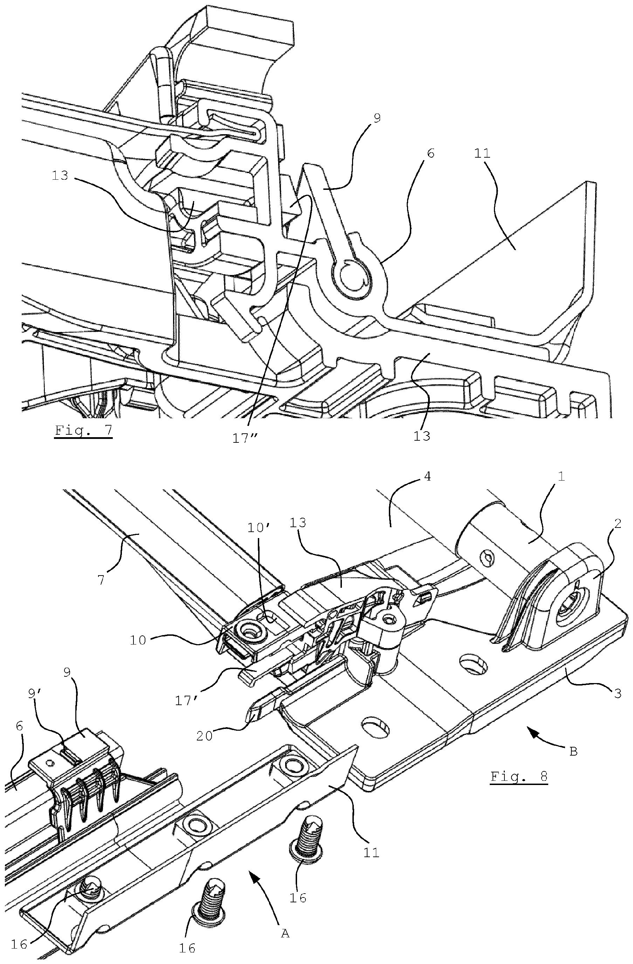

For the ease of assembling the rollo assembly, the end part 13" of the lead-in guide 13 and the rearward end 12 of the longitudinal guide 6 comprise cooperating aligning members adapted to provide, during assembly of the rollo assembly, an automatic positioning (at least a rotation) of the lead-in guide in a position in which, in the assembled position of the rollo assembly, its end part 13" in a desired manner connects to the rearward end 12 of the longitudinal guide 6. In figures 6 and 7 the aligning members on the lead-in guide 13 have been indicated as projections 17' and 17" which will cooperate with parts of the longitudinal guide 6 acting as aligning surfaces (not numbered).

Similarly, the end part 13" of the lead-in guide 13 and rearward end 12 of the longitudinal guide 6 may be provided with cooperating connecting members for securely attaching the lead-in guide to the longitudinal guide, such as, for example, cooperating projections and recesses or snap members. In the illustrated embodiment (see figures 5 and 6) the outer end of the upper aligning member 17' defines a hook 18 which can snap behind a shoulder 19 provided on the longitudinal guide 6.

Further, the carrier part or plate 3 and the longitudinal guides 6 are provided with cooperating pre-aligning members adapted to pre-align the carrier part and longitudinal guides during assembly of the rollo assembly. A projecting pre-aligning member 20 on the carrier plate is visible best in figure 6, and it will cooperate with parts of the longitudinal guide 6 acting as aligning surfaces (not numbered).

Now referring to figures 8-10 a method for assembling a rollo assembly according to the present invention will be described.

Firstly (see figure 8), as first steps, the winding shaft 1 will be mounted to the carrier part 3 (using the rollo bearings 2) in a manner to be rotatable for winding thereon or unwinding therefrom the rollo cloth 4. Also, each lead-in guide 13 is mounted to the carrier part 3 (using, for example, the screw 14') in a manner to be rotable around its rotation axis 14 which extends substantially perpendicularly to the part of a rollo cloth 4 that is unwound from the winding shaft 1. Or, in other words, mounting the lead-in guides to the carrier part during this step comprises fastening the lead-in guides to the carrier part using screws (or bolts) which are mounted with a moment not impeding a rotation of the lead-in guides with respect to the carrier part. The longitudinal guide 6 is attached to the frame part 11 using the fasteners 16 (this may be done before, during or after the above steps). As a result, two units A and B are obtained which hereafter will have to be combined.

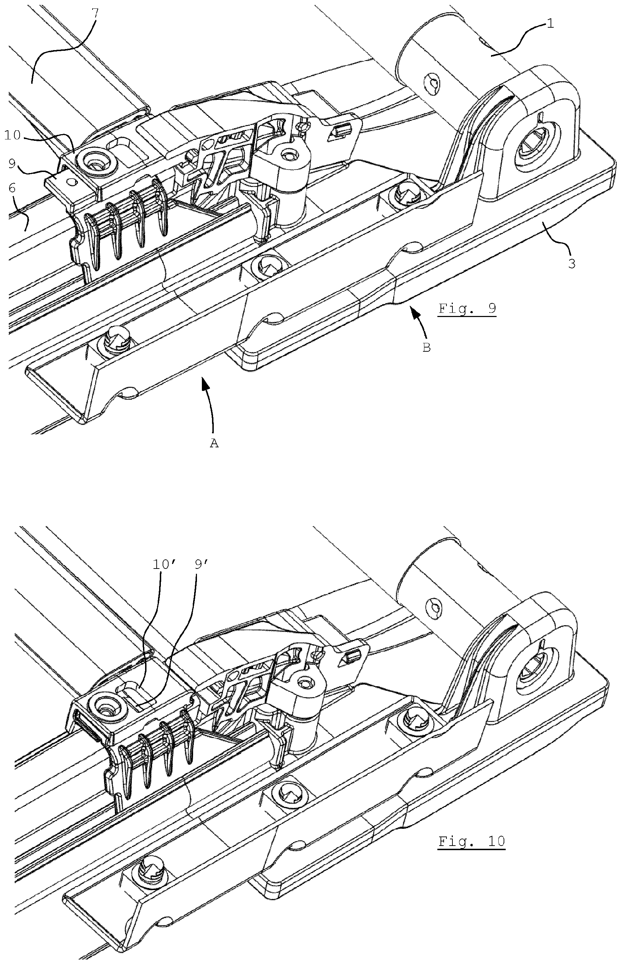

As a next step (figure 9) these units A and B are moved towards each other in such a manner that the cooperating aligning members described before on the lead-in guides and on the longitudinal guides will cooperate for positioning and rotating the lead-in guides to a desired position, and in such a manner that a connection between the lead-in guides and the longitudinal guides will be established. Moving unit A (with the longitudinal guides 6) and unit B (with carrier plate 3 and lead-in guide 13) towards each other during this step will causes the cooperating connecting members on the lead-in guides and on the longitudinal guides described before to cooperate for securely attaching the units A and B to each other.

It is noted that in figure 9 a position is illustrated in which the drive member plate 9 is partly (but not yet entirely) received in the adapter 10. However, it is conceivable too that at this stage of the assembling process these two parts still are entirely disengaged from each other.

Finally (see figure 10) the step of moving towards each other the pull beam 7 provided at the leading end of the rollo cloth 4 and the drive members 8 extending in the longitudinal guides 6 (and specifically, in this embodiment, the drive member plates 9) is carried out, in such a manner that the cooperating coupling members provided on the adapter of the pull beam and on the drive member plates of the drive members (as described before) establish a coupling therebetween which is adapted to transmit a driving force from the drive members (push/pull cables 8) to the pull beam. In figure 10 this means that the snap lip 9' on the drive member plate 9 (see figure 8) has entered the snapping opening 10' (see figure 8) in the adapter 10.

Moving the pull beam 7 and drive member plates 9 towards each other comprises (a) manually moving the pull beam 7 away from the winding shaft 1 and towards the drive member plates 9 or (b) driving (for example using an electric motor acting on the push/pull cables 8) the drive member plates towards the pull beam.

The invention is not limited to the described embodiments which may be varied widely within the scope of the invention as defined by the appending claims.

## Claims

1. Rollo assembly intended for use in an open roof construction for a vehicle, comprising a rotatable winding shaft (1), a rollo cloth (4) which in a desired amount is windable onto or unwindable from the winding shaft (1), which rollo cloth (4) comprises two opposite longitudinal edges (5) defining therebetween a rollo cloth (4) width, two opposite longitudinal guides (6) intended for guiding respective ones of the longitudinal edges (5) of the rollo cloth (4) and defining a guide (13) distance between the longitudinal guides (6), which longitudinal guides (6) each have a forward end facing away from the winding shaft (1) and a rearward end (12) facing towards the winding shaft (1) and separated therefrom by a gap, wherein the rollo assembly between the rearward end (12) of each longitudinal guide (6) and the winding shaft (1) further comprises a lead-in guide (13) for guiding a respective one of the longitudinal edges (5) of the rollo cloth (4), after being unwound from the winding shaft (1), across the gap and into the rearward end (12) of the longitudinal guide (6), and for compensating any difference between the rollo cloth (4) width and the guide (13) distance,wherein the lead-in guide (13) has an end part which in an assembled position of the rollo assembly faces and connects to the rearward end (12) of the longitudinal guide (6), **characterized in that** said lead-in guide (13) is mounted for a rotation around a rotation axis (14) which extends substantially perpendicularly to a part of the rollo cloth (4) that is unwound from the winding shaft (1).

2. Rollo assembly according to claim 1, wherein in an operational position of the rollo assembly the longitudinal guides and the winding shaft extend substantially horizontally, and the rotational axis extends substantially vertically.

3. Rollo assembly according to any of the previous claims, wherein the end part of the lead-in guide and the rearward end of the longitudinal guide comprise cooperating aligning members adapted to provide, during assembly of the rollo assembly, an automatic positioning of the lead-in guide in a position in which, in the assembled position of the rollo assembly, its end part in a desired manner connects to the rearward end of the longitudinal guide.

4. Rollo assembly according to claim 3, wherein the aligning members comprise projections provided on the lead-in guide and aligning surfaces provided on the longitudinal guides or vice versa.

5. Rollo assembly according to any of the previous claims, wherein the end part of the lead-in guide and rearward end of the longitudinal guide are provided with cooperating connecting members for securely attaching the lead-in guide to the longitudinal guide, such as, for example, cooperating projections and recesses or snap members.

6. Rollo assembly according to any of the previous claims and further comprising a carrier part supporting a bearing for the winding shaft and supporting the rotation axis with lead-in guide, wherein said carrier part and the longitudinal guides are provided with cooperating pre-aligning members adapted to pre-align the carrier part and longitudinal guides during assembly of the rollo assembly.

7. Rollo assembly according to claim 6, wherein the pre-aligning members comprise projections provided on the carrier part and aligning surfaces provided on the longitudinal guides or vice versa.

8. Rollo assembly according to claim 6 or 7, further comprising a frame part for securely fixing the carrier part to a longitudinal guide.

9. Rollo assembly according to any of the previous claims, wherein the rotation axis for the lead-in guide is defined by a screw member.

10. Rollo assembly according to any of the previous claims, wherein the longitudinal guides house drive members, such as for example push/pull cables, for the rollo cloth and wherein the rollo cloth at a leading end thereof facing away from the winding shaft and extending between the opposite longitudinal edges of the rollo cloth is provided with a pull beam, wherein the drive members and pull beam are provided with cooperating coupling members intended for establishing a coupling therebetween.

11. Rollo assembly according to claim 10, wherein the coupling members are provided on adapters attached to opposite ends of the pull beam and on drive member plates attached to the drive members, respectively.

12. Rollo assembly according to claim 10 or 11, wherein the cooperating coupling members are adapted to provide a snap coupling between the drive members and pull beam.

13. Rollo assembly according to any of the claims 10-12, wherein the coupling can be established during assembly of the rollo assembly by manually moving the pull beam away from the winding shaft and towards the drive members or by activating the drive members to move in the direction of the drive shaft and towards the pull beam.

14. Method for assembling a rollo assembly according to any of the previous claims, comprising the steps of:
(a) mounting the winding shaft (1) to a carrier part in a manner to be rotatable for winding thereon or unwinding therefrom the rollo cloth (4), and mounting the lead-in guides to the carrier part in a manner to be each rotable around an axis substantially perpendicularly to the part of the rollo cloth (4) that is unwound from the winding shaft (1); (b) moving towards each other the carrier part and longitudinal guides (6) in such a manner that cooperating aligning members on the lead-in guides and on the longitudinal guides (6) will cooperate for rotating the lead-in guides to a desired position, and in such a manner that a connection between the lead-in guides and the longitudinal guides (6) will be established; (c) moving towards each other a pull beam (7) provided at a leading end of the rollo cloth (4) and drive members (8) extending in the longitudinal guides (6), in such a manner that cooperating coupling members provided on the pull beam (7) and on the drive members (8) establish a coupling therebetween which is adapted to transmit a driving force from the drive members (8) to the pull beam (7).

15. Method according to claim 14,
- wherein mounting the lead-in guides to the carrier part during step (a) comprises fastening the lead-in guides to the carrier part using screws or bolts which are mounted with a moment not impeding a rotation of the lead-in guides with respect to the carrier part; and/or
- wherein moving the carrier part and longitudinal guides towards each other during step (b) causes cooperating connecting members on the lead-in guides and on the longitudinal guides to cooperate for securely attaching the lead-in guides to the longitudinal guides; and/or
- wherein moving the pull beam and drive members towards each other comprises manually moving the pull beam towards the drive members or driving the drive members towards the pull beam; and/or
- wherein the method further comprises the step of connecting the carrier plate and longitudinal guides using an additional frame part.

## Patentansprüche

1. Rolloanordnung, die zur Verwendung bei einer Offendachkonstruktion für ein Fahrzeug vorgesehen ist, aufweisend eine drehbare Wickelwelle (1), einen Rollostoff (4), welcher in einem gewünschten Betrag auf die Wickelwelle (1) aufwickelbar und von dieser abwickelbar ist, welcher Rollostoff (4) zwei entgegengesetzte Längsränder (5) aufweist, die dazwischen eine Rollostoff (4) - Breite definieren, zwei entgegengesetzte Längsführungen (6), die zum Führen von jeweils zugeordneten der Längsränder (5) des Rollostoffes (4) vorgesehen sind und einen Führung (13) - Abstand zwischen den Längsführungen (6) definieren, welche Längsführungen (6) jeweils ein vorderes Ende, das von der Wickelwelle (1) abgewandt ist, und ein hinteres Ende (12) aufweisen, das der Wickelwelle (1) zugewandt ist und um einen Spalt davon getrennt ist, wobei die Rolloanordnung zwischen dem hinteren Ende (12) jeder Längsführung (6) und der Wickelwelle (1) ferner eine Einlaufführung (13) zum Führen eines jeweils zugeordneten der Längsränder (5) des Rollostoffes (4) nach dem Abwickeln von der Wickelwelle (1) über den Spalt und in das hintere Ende (12) der Längsführung (6) und zum Kompensieren einer Differenz zwischen der Rollostoff (4) - Breite und dem Führung (13) - Abstand aufweist, wobei die Einlaufführung (13) einen Endabschnitt aufweist, welcher in einer Montageposition der Rolloanordnung dem hinteren Ende (12) der Längsführung (6) zugewandt ist und damit in Verbindung steht, **dadurch gekennzeichnet, dass** die Einlaufführung (13) für eine Drehung um eine Drehachse (14) montiert ist, welche sich im Wesentlichen senkrecht zu einem Abschnitt des Rollostoffes (4) erstreckt, der von der Wickelwelle (1) abgewickelt ist.

2. Rolloanordnung nach Anspruch 1, wobei in einer Betriebsposition der Rolloanordnung die Längsführungen und die Wickelwelle sich im Wesentlichen horizontal erstrecken und die Drehachse sich im Wesentlichen vertikal erstreckt.

3. Rolloanordnung nach einem der vorhergehenden Ansprüche, wobei der Endabschnitt der Einlaufführung und das hintere Ende der Längsführung zusammenwirkende Ausrichtungselemente aufweisen, die angepasst sind, um während der Montage der Rolloanordnung eine automatische Positionierung der Einlaufführung in einer Position bereitzustellen, in welcher in der Montageposition der Rolloanordnung ihr Endabschnitt in einer gewünschten Weise mit dem hinteren Ende der Längsführung in Verbindung steht.

4. Rolloanordnung nach Anspruch 3, wobei die Ausrichtungselemente Vorsprünge, die an der Einlaufführung vorgesehen sind, und Ausrichtungsflächen aufweisen, die an den Längsführungen oder umgekehrt vorgesehen sind.

5. Rolloanordnung nach einem der vorhergehenden Ansprüche, wobei der Endabschnitt der Einlaufführung und das hintere Ende der Längsführung mit zusammenwirkenden Verbindungselementen zum sicheren Befestigen der Einlaufführung an der Längsführung, wie zum Beispiel zusammenwirkenden Vorsprüngen und Ausnehmungen oder Schnappelementen versehen sind.

6. Rolloanordnung nach einem der vorhergehenden Ansprüche und ferner aufweisend einen Trägerabschnitt, der ein Lager für die Wickelwelle abstützt und die Drehachse mit der Einlaufführung abstützt, wobei der Trägerabschnitt und die Längsführungen mit zusammenwirkenden Vorausrichtungselementen versehen sind, die angepasst sind, um den Trägerabschnitt und die Längsführungen während der Montage der Rolloanordnung vorauszurichten.

7. Rolloanordnung nach Anspruch 6, wobei die Vorausrichtungselemente Vorsprünge, die an dem Trägerabschnitt vorgesehen sind, und Ausrichtungsflächen aufweisen, die an den Längsführungen oder umgekehrt vorgesehen sind.

8. Rolloanordnung nach Anspruch 6 oder 7, ferner aufweisend einen Rahmenabschnitt zum sicheren Fixieren des Trägerabschnitts an einer Längsführung.

9. Rolloanordnung nach einem der vorhergehenden Ansprüche, wobei die Drehachse für die Einlaufführung durch ein Schraubenelement definiert ist.

10. Rolloanordnung nach einem der vorhergehenden Ansprüche, wobei die Längsführungen Antriebselemente, wie zum Beispiel Druck/Zug-Seile, für den Rollostoff aufnehmen, und wobei der Rollostoff an einem vorlaufenden Ende davon, das von der Wickelwelle abgewandt ist und sich zwischen den entgegengesetzten Längsrändern des Rollostoffes erstreckt, mit einem Zugbalken versehen ist, wobei die Antriebselemente und der Zugbalken mit zusammenwirkenden Kupplungselementen versehen sind, die zum Bilden einer Kupplung dazwischen vorgesehen sind.

11. Rolloanordnung nach Anspruch 10, wobei die Kupplungselemente an Adaptern, die an entgegengesetzten Enden des Zugbalkens befestigt sind, und an Antriebselementplatten vorgesehen sind, die jeweils zugeordnet an den Antriebselementen befestigt sind.

12. Rolloanordnung nach Anspruch 10 oder 11, wobei die zusammenwirkenden Kupplungselemente angepasst sind, um eine Schnappkupplung zwischen den Antriebselementen und dem Zugbalken bereitzustellen.

13. Rolloanordnung nach einem der Ansprüche 10-12, wobei die Kupplung während der Montage der Rolloanordnung durch manuelles Bewegen des Zugbalkens von der Wickelwelle weg und zu den Antriebselementen hin oder durch Betätigen der Antriebselemente zum Bewegen in der Richtung der Antriebswelle und zu dem Zugbalken hin gebildet werden kann.

14. Verfahren zur Montage einer Rolloanordnung nach einem der vorhergehenden Ansprüche, aufweisend die Schritte von:
(a) Montieren der Wickelwelle (1) an einen Trägerabschnitt derart, dass sie zum Aufwickeln des Rollostoffes (4) darauf oder Abwickeln davon drehbar ist, und Montieren der Einlaufführungen an den Trägerabschnitt derart, dass sie jeweils um eine zu dem Abschnitt des Rollostoffes (4), der von der Wickelwelle (1) abgewickelt ist, im Wesentlichen senkrechte Achse drehbar sind; (b) Bewegen des Trägerabschnitts und der Längsführungen (6) zueinander hin derart, dass zusammenwirkende Ausrichtungselemente an den Einlaufführungen und an den Längsführungen (6) zum Drehen der Einlaufführungen in eine gewünschte Position zusammenwirken, und derart, dass eine Verbindung zwischen den Einlaufführungen und den Längsführungen (6) gebildet wird; (c) Bewegen eines Zugbalkens (7), der an einem vorlaufenden Ende des Rollostoffes (4) vorgesehen ist, und von Antriebselementen (8), die sich in den Längsführungen (6) erstrecken, zueinander hin derart, dass zusammenwirkende Kupplungselemente, die an dem Zugbalken (7) und an den Antriebselementen (8) vorgesehen sind, eine Kupplung dazwischen bilden, welche angepasst ist, um eine Antriebskraft von den Antriebselementen (8) an den Zugbalken (7) zu übertragen.

15. Verfahren nach Anspruch 14,
- wobei das Montieren der Einlaufführungen an den Trägerabschnitt während des Schrittes (a) aufweist das Befestigen der Einlaufführungen an den Trägerabschnitt mittels Schrauben oder Bolzen, welche mit einem Moment montiert werden, das eine Drehung der Einlaufführungen in Bezug auf den Trägerabschnitt nicht behindert; und/oder
- wobei das Bewegen des Trägerabschnitts und der Längsführungen zueinander hin während des Schrittes (b) das Zusammenwirken von Verbindungselementen an den Einlaufführungen und an den Längsführungen, um zum sicheren Befestigen der Einlaufführungen an den Längsführungen zusammenzuwirken, bewirkt; und/oder
- wobei das Bewegen des Zugbalkens und der Antriebselemente zueinander hin das manuelle Bewegen des Zugbalkens zu den Antriebselementen hin oder das Antreiben der Antriebselemente zu dem Zugbalken hin aufweist; und/oder
- wobei das Verfahren ferner den Schritt des Verbindens der Trägerplatte und der Längsführungen mittels eines zusätzlichen Rahmenabschnitts aufweist.

## Revendications

1. Ensemble store à enrouleur destiné à être utilisé dans une construction de toit ouvrant pour un véhicule, comprenant un arbre d'enroulement rotatif (1), un tissu de store à enrouleur (4) lequel, selon une ampleur souhaitée, est enroulable sur ou déroulable de l'arbre d'enroulement (1), lequel tissu de store à enrouleur (4) comprend deux bords longitudinaux opposés (5) définissant entre ceux-ci une largeur de tissu de store à enrouleur (4), deux guides longitudinaux opposés (6) destinés à guider certains respectifs des bords longitudinaux (5) du tissu de store à enrouleur (4) et définissant une distance de guide (13) entre les guides longitudinaux (6), lesquels guides longitudinaux (6) comportent chacun une extrémité avant orientée à l'opposé de l'arbre d'enroulement (1) et une extrémité arrière (12) orientée vers l'arbre d'enroulement (1) et séparée de celui-ci par un espace, dans lequel l'ensemble store à enrouleur, entre l'extrémité arrière (12) de chaque guide longitudinal (6) et l'arbre d'enroulement (1), comprend en outre un guide d'insertion (13) pour guider l'un respectif des bords longitudinaux (5) du tissu de store à enrouleur (4), après qu'il a été déroulé de l'arbre d'enroulement (1), à travers l'espace et à l'intérieur de l'extrémité arrière (12) du guide longitudinal (6), et pour compenser toute différence entre la largeur du tissu de store à enrouleur (4) et la distance de guide (13), dans lequel le guide d'insertion (13) comporte une partie d'extrémité qui, dans une position assemblée de l'ensemble store à enrouleur, est orientée vers et se relie à l'extrémité arrière (12) du guide longitudinal (6), **caractérisé en ce que** ledit guide d'insertion (13) est monté pour une rotation autour d'un axe de rotation (14) qui s'étend sensiblement perpendiculairement à une partie du tissu de store à enrouleur (4) qui est déroulée de l'arbre d'enroulement (1).

2. Ensemble store à enrouleur selon la revendication 1, dans lequel, dans une position de fonctionnement de l'ensemble store à enrouleur, les guides longitudinaux et l'arbre d'enroulement s'étendent sensiblement horizontalement et l'axe de rotation s'étend sensiblement verticalement.

3. Ensemble store à enrouleur selon l'une quelconque des revendications précédentes, dans lequel la partie d'extrémité du guide d'insertion et l'extrémité arrière du guide longitudinal comprennent des éléments d'alignement coopérants adaptés pour fournir, pendant l'assemblage de l'ensemble store à enrouleur, un positionnement automatique du guide d'insertion dans une position dans laquelle, dans la position assemblée de l'ensemble store à enrouleur, sa partie d'extrémité dans une manière souhaitée se relie à l'extrémité arrière du guide longitudinal.

4. Ensemble store à enrouleur selon la revendication 3, dans lequel les éléments d'alignement comprennent des saillies disposées sur le guide d'insertion et des surfaces d'alignement disposées sur les guides longitudinaux ou vice versa.

5. Ensemble store à enrouleur selon l'une quelconque des revendications précédentes, dans lequel la partie d'extrémité du guide d'insertion et l'extrémité arrière du guide longitudinal sont pourvues d'éléments de liaison coopérants pour fixer solidement le guide d'insertion au guide longitudinal, tels que, par exemple, des saillies et des évidements coopérants ou des éléments d'encliquetage.

6. Ensemble store à enrouleur selon l'une quelconque des revendications précédentes, et comprenant en outre une partie support supportant un palier pour l'arbre d'enroulement et supportant l'axe de rotation avec le guide d'insertion, dans lequel ladite partie support et les guides longitudinaux sont pourvus d'éléments de pré-alignement coopérants adaptés pour pré-aligner la partie support et les guides longitudinaux pendant l'assemblage de l'ensemble store à enrouleur.

7. Ensemble store à enrouleur selon la revendication 6, dans lequel les éléments de pré-alignement comprennent des saillies disposées sur la partie support et des surfaces d'alignement disposées sur les guides longitudinaux ou vice versa.

8. Ensemble store à enrouleur selon la revendication 6 ou 7, comprenant en outre une partie cadre pour fixer solidement la partie support à un guide longitudinal.

9. Ensemble store à enrouleur selon l'une quelconque des revendications précédentes, dans lequel l'axe de rotation pour le guide d'insertion est défini par un élément à vis.

10. Ensemble store à enrouleur selon l'une quelconque des revendications précédentes, dans lequel les guides longitudinaux logent des éléments d'entraînement, tels que, par exemple, des cordons à pousser/tirer, pour le tissu de store à enrouleur et dans lequel le tissu de store à enrouleur, au niveau d'une extrémité de tête de celui-ci orientée à l'opposé de l'arbre d'enroulement et s'étendant entre les bords longitudinaux opposés du tissu de store à enrouleur, est pourvu d'une barre de tirage, dans lequel les éléments d'entraînement et la barre de tirage sont pourvus d'éléments d'accouplement coopérants destinés à établir un accouplement entre ceux-ci.

11. Ensemble store à enrouleur selon la revendication 10, dans lequel les éléments d'accouplement sont disposés sur des adaptateurs fixés à des extrémités opposées de la barre de tirage et sur des plaques d'élément d'entraînement fixées aux éléments d'entraînement, respectivement.

12. Ensemble store à enrouleur selon la revendication 10 ou 11, dans lequel les éléments d'accouplement coopérants sont adaptés pour fournir un accouplement par encliquetage entre les éléments d'entraînement et la barre de tirage.

13. Ensemble store à enrouleur selon l'une quelconque des revendications 10 à 12, dans lequel l'accouplement peut être établi pendant l'assemblage de l'ensemble store à enrouleur par déplacement manuel de la barre de tirage à l'opposé de l'arbre d'enroulement et vers les éléments d'entraînement ou par actionnement des éléments d'entraînement afin qu'ils se déplacent dans la direction de l'arbre d'entraînement et vers la barre de tirage.

14. Procédé d'assemblage d'un ensemble store à enrouleur selon l'une quelconque des revendications précédentes, comprenant les étapes consistant à :
(a) monter l'arbre d'enroulement (1) sur une partie support de manière à ce qu'il puisse tourner pour enrouler sur celui-ci ou dérouler de celui-ci le tissu de store à enrouleur (4), et monter les guides d'insertion sur la partie support de manière à ce que chacun puisse tourner autour d'un axe sensiblement perpendiculairement à la partie du tissu de store à enrouleur (4) qui est déroulée de l'arbre d'enroulement (1) ; (b) déplacer les uns vers les autres la partie support et les guides longitudinaux (6) d'une telle manière que des éléments d'alignement coopérants sur les guides d'insertion et sur les guides longitudinaux (6) coopèrent pour entraîner en rotation les guides d'insertion vers une position souhaitée, et d'une telle manière qu'une liaison entre les guides d'insertion et les guides longitudinaux (6) sera établie ; (c) déplacer les uns vers les autres une barre de tirage (7) disposée au niveau d'une extrémité de tête du tissu de store à enrouleur (4) et des éléments d'entraînement (8) s'étendant dans les guides longitudinaux (6), d'une telle manière que des éléments d'accouplement coopérants disposés sur la barre de tirage (7) et sur les éléments d'entraînement (8) établissent entre ceux-ci un accouplement qui soit adapté à transmettre une force d'entraînement à partir des éléments d'entraînement (8) à la barre de tirage (7).

15. Procédé selon la revendication 14,
- dans lequel le montage des guides d'insertion sur la partie support pendant l'étape (a) comprend la fixation des guides d'insertion sur la partie support à l'aide de vis ou de boulons qui sont montés avec un moment qui n'empêche pas une rotation des guides d'insertion par rapport à la partie support ; et/ou
- dans lequel le déplacement de la partie support et des guides longitudinaux en direction les uns des autres pendant l'étape (b) amène des éléments de liaison coopérants sur les guides d'insertion et sur les guides longitudinaux à coopérer pour fixer solidement les guides d'insertion aux guides longitudinaux ; et/ou
- dans lequel le déplacement de la barre de tirage et des éléments d'entraînement en direction les uns des autres comprend le déplacement manuel de la barre de tirage vers les éléments d'entraînement ou l'entraînement des éléments d'entraînement vers la barre de tirage ; et/ou
- dans lequel le procédé comprend en outre l'étape consistant à relier la plaque de support et les guides longitudinaux à l'aide d'une partie cadre supplémentaire.
